# EUROPEAN PATENT SPECIFICATION

(11) **EP 0 468 713 B1**
(45) Date of publication and mention of the grant of the patent: **28.12.1994**
(21) Application number: 91306607.2
(22) Date of filing: 19.07.1991
(51) Int. Cl.: B60J 1/00, B29C 45/14

(54) **Edge encapsulated panel and process for producing the same**
Platte mit einer Randeinfassung und Verfahren zu deren Herstellung
Panneau bordé d'un encadrement et son procédé de fabrication

(30) Priority: 21.07.1990 GB 9016059
(43) Date of publication of application: 29.01.1992
(73) Proprietor: PILKINGTON PLC, St. Helens, Merseyside WA10 3TT (GB)
(72) Inventor: Morris, Peter, St. Helens, Merseyside WA11 0XA (GB); Holland, Anthony Richard, St. Helens, Merseyside WA9 5AJ (GB)
(74) Representative: Pendlebury, Anthony

(56) References cited:
- EP-A- 0 242 223
- WO-A-87/04973
- GB-A- 2 011 517
- GB-A- 2 147 244
- US-A- 4 688 752
- US-A- 4 723 809
- US-A- 4 732 553

## Description

The present invention relates to edge encapsulated panels incorporating at least one fastener, and processes for producing the same.

In recent years, window assemblies for vehicles have progressed from individually assembled units built up from separate parts by the vehicle manufacturer to unitary modular designs which are completely preassembled as a unit before supply to the vehicle manufacturer and which can be applied as a unit from the exterior of a vehicle in a single operation. Such assemblies provide considerable savings to the vehicle manufacturer in time and cost.

Various types of fasteners have been suggested for securing glazings to vehicles. Some of these proposals have included metal fasteners embedded in a molded casing encapsulating the marginal periphery of a window glass and intended to project through an opening in the vehicle body for securement on the interior of the vehicle. A fastener of this type including an exterior threaded head to which is attached an interior threaded nut for securing a glazing to a vehicle body is described in United Kingdom patent application number GB-A-2 011 517 .

An edge encapsulated window incorporating a similar fastener is disclosed in US-A-4 723 809, together with a mold assembly having a recess shaped to be complementary to the desired edge encapsulation, into which recess the encapsulating liquid is injected.

US-A-4 723 809 discloses a process for edge encapsulating a panel and an edge encapsulated panel having the features of the precharacterising portions of claims 1 and 8 respectively.

However, problems have been encountered when attempting to encapsulate these known fasteners, particularly when the fasteners are threaded, because unwanted encapsulant tends to flow up the thread of the fastener. Removing this unwanted encapsulant (known as "flashing") from the thread after it has hardened is a time consuming, and hence costly, operation.

The present invention aims to overcome the difficulties associated with incorporating threaded fasteners in an edge encapsulation.

Accordingly, the present invention provides a process for edge encapsulating a panel with a molded-on encapsulation incorporating at least one fastener protruding from the encapsulation for securing the panel in position in use, which process comprises providing a mold with a cavity shaped to provide a closed volume around the marginal periphery of at least a part of a panel positioned in the mold, positioning a panel in the mold with at least one fastener having an anchor portion disposed in said closed volume and a threaded portion protruding therefrom, injecting a settable encapsulating liquid into the closed volume and setting the liquid characterised by placing an elastomeric gasket around the fastener before the fastener is placed in the mold, so that the gasket is provided around the fastener where the fastener protrudes from the closed volume to provide a seal between the mold and the fastener.

The present invention also provides an edge encapsulated panel incorporating at least one fastener including an anchor portion embedded in the encapsulation and a threaded portion protuding therefrom characterised by an elastomeric gasket bonded to the encapsulating material around the fastener where the fastener protrudes from the encapsulating material.

The invention will now be described by way of example only, with reference to the following drawings, in which :
Figure 1 is a partly cut away diagrammatic plan view of an assembly for use in the present invention.
Figure 2 is an enlarged cross-sectional representation on the line II-II in figure 1.
Figure 3 is an enlarged plan view of a fastener which is to be incorporated in an edge encapsulation according to the present invention.
Figure 4 is a section on the line IV-IV in figure 3.
Figure 5 is a diagrammatic plan view of an edge encapsulated panel according to the present invention.
Figure 6 is an enlarged section on the line VI-VI in figure 5.

A process according to the present invention will now be described.

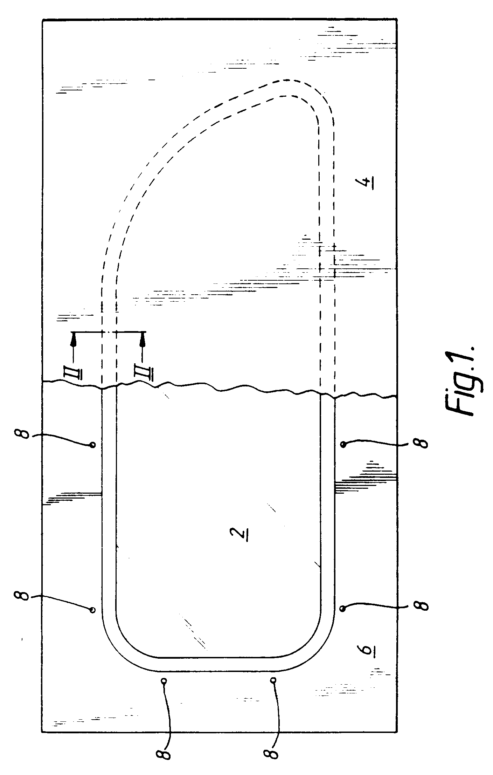

In figure 1 there is shown a panel comprising a pane of glass 2 in a mold which is constituted by an upper mold part 4 and a lower mold part 6 between which the glass pane 2 is located. In the cutaway part of the drawing, the upper mold part 4 is omitted exposing the lower mold part 6 with alignment holes 8 therein which cooperate with studs (not shown) in the upper mold part 4 to align the upper and lower molds.

In use the glass sheet 2 is positioned on the lower mold part 6 and then the upper mold part 4 is located over the glass pane 2 and pressure is applied to the mold parts to maintain the assembly in position. The glass is separated from the mold parts by seals 9 which are chosen from materials that do not adhere to the encapsulating material.

The marginal periphery of the glass pane 2 extends in the hollow cavity between the upper and lower mold parts 4 and 6 to define, with the mold parts and seals 9, a closed volume 10.

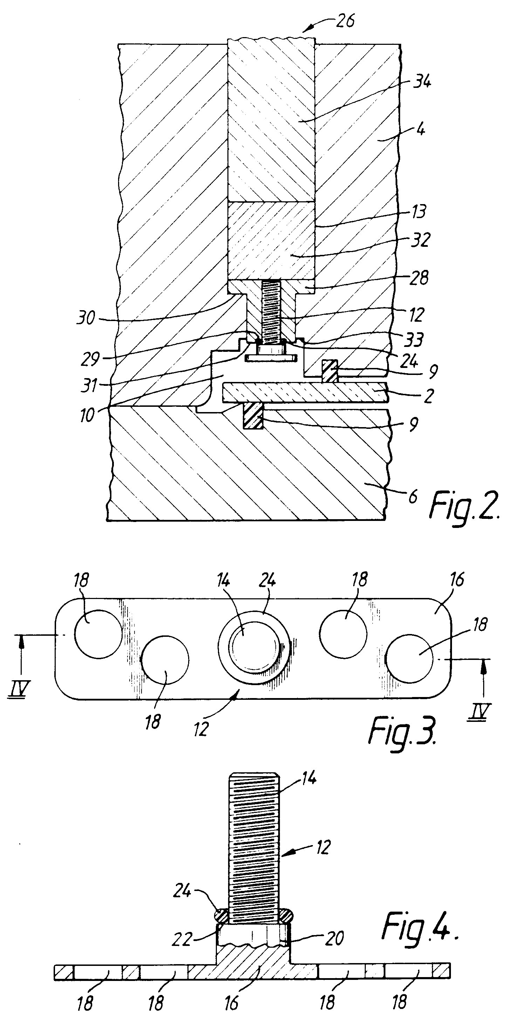

Also shown projecting into the closed volume 10 is a threaded fastener 12. A plurality of fasteners may be located around the marginal periphery of the pane 2 projecting into the closed volume 10. The upper mold part 4 includes a stepped bore 13 in which the threaded fastener 12 is located as explained below. The fastener is shown in more detail in figures 3 and 4.

The fastener 12 comprises a partly threaded cylindrical head 14 welded to a baseplate or anchor portion 16. The baseplate 16 is perforated by holes 18. A region 20 of the head 14 extending from the baseplate 16 for approximately one quarter of the length of the head 14 is not threaded and is of greater diameter than the threaded portion so that it provides a shoulder 22 against which may be mounted an elastomeric gasket in the form of a rubber ring 24 which prevents the egress of encapsulating liquid along the thread during the encapsulating stage which is further discussed below.

The threaded fastener 12 is mounted in the upper mold part 4 by a mounting assembly 26 which constitutes part of the upper mold part 4 and can be seen in figure 2 mounted in the stepped bore 13 . The assembly 26 comprises a mounting jig 28, a magnet 32 and a plug 34. The mounting jig 28 has a cylindrical bore through its centre with an annular rebate 29 at the exposed end 31 thereof. The exposed end 31 extends into the closed volume 10 a distance substantially equal to the depth of the rebate 29, so that in the finished encapsulated product, the outer face of ring 24 is substantially flush with the outermost face of the encapsulation. The mounting jig 28 also includes an external shoulder 30 which cooperates with the step in the stepped bore 13 in upper mold part 4 to locate the jig 28 in the upper mold part 4. Also within the stepped bore 13 is a cylindrical magnet 32 which rests flush against the end of the jig 28 distant from the closed volume 10 and a cylindrical plug 34 which lies against the magnet 32 and is capable of maintaining the mounting assembly 26 in position by the application of suitable pressure.

The rubber ring 24 is mounted on the threaded head of fastener 12 as shown in Figures 3 and 4, and the threaded head of the fastener 12 is then inserted into the cylindrical bore in the jig 28 until the end of the fastener contacts the magnet 32. The ring 24 is thus located in the rebate 29, the diameter of the rebate being such that the ring 24 is held in compression, this serves two purposes. Firstly, it ensures that during the edge encapsulation stage (discussed below) the encapsulating liquid cannot creep past the ring 24. Secondly, it provides a means for holding the fastener 12 in place. The head 14 is formed from a magnetic material (mild steel) so that the magnet 32 also holds the fastener 12 in place as a secondary fail-safe. It is important that the fastener 12 does not fall on to the mold prior to the closure of the mold because of the damage that might be caused to the mold when it is closed. The ring is preferably selected to be of rubber or other material to which the encapsulation liquid will bond when it sets, incorporating the ring in the encapsulation. Once the mold has been assembled with the glass pane 2 and the fasteners 12 in place, the edge encapsulation stage may commence.

The process of encapsulation is well known in the art, reference is made to the following patent specifications: GB-B-2 147 244, WO-A-87/04973, US-A-4 688 752 and US-A-4 732 553 in which processes suitable for encapsulating panels are described in more detail.

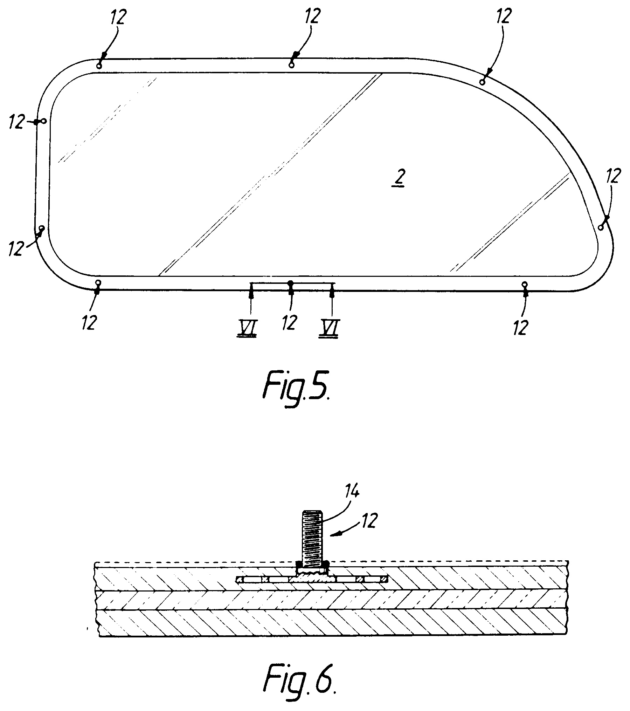

The resulting edge encapsulated panel is shown in figures 5 and 6.

The glass pane 2 is shown encapsulated around its marginal periphery by a hardened encapsulating material constituting a molded-on encapsulation. The threaded part of the heads 14 protrudes from the encapsulating material for securing the glass pane 2 in position relative to a vehicle body. The rubber ring 24 is bonded to the encapsulating material . As shown by the dotted line in figure 6, the rubber ring 24 is substantially flush with the outermost part of the encapsulation , which is formed against the highest part 33 of upper mold part 4.

The holes 18 in the baseplate 16 have hardened encapsulating material through them which strengthens the bond of the fastener 10 to the encapsulating material.

The use of the invention obviates the need to remove "flashing" from the thread of the threaded fastener resulting in significant savings in production costs. Moreover, by providing the gasket on the fastener and incorporating it in the encapsulation, there is no need to fit gaskets to the mold, or replace worn gaskets in the mold.

## Claims

1. A process for edge encapsulating a panel (2) with a molded-on encapsulation incorporating at least one fastener (12) protruding from the encapsulation for securing the panel (2) in position in use, which process comprises providing a mold (4,6) with a cavity shaped to provide a closed volume (10) around the marginal periphery of at least a part of a panel (2) positioned in the mold (4,6), positioning a panel in the mold (4,6) with at least one fastener (12) having an anchor portion (16) disposed in said closed volume (10) and a threaded portion protruding therefrom, injecting a settable encapsulating liquid into the closed volume and setting the liquid, characterised by placing an elastomeric gasket (24) around the fastener (12) before the fastener (18) is placed in the mold (4,6), so that the gasket (24) is provided around the fastener (12) where the fastener (12) protrudes from the closed volume (10) to provide a seal between the mold (4,6) and the fastener (12).

2. A process according to claim 1 in which the gasket (24) is held in compression in a rebate (29) of the mold (4,6).

3. A process according to claims 1 or 2 in which, on setting the encapsulating liquid, the gasket (24) is bonded to the encapsulation material.

4. A process according to claim 3 in which the gasket (24) is substantially flush with the outermost surface of the encapsulation.

5. A process according to any preceding claim in which the fastener (12) is held in place, prior to the injection of the settable encapsulating liquid, by a magnet (32) incorporated in the mold (4,6).

6. A process according to any preceding claim in which the anchor portion (16) of the fastener (12) comprises a perforated baseplate.

7. A process according to any preceding claim in which the panel (2) is a window pane for a vehicle.

8. An edge encapsulated panel (2) incorporating at least one fastener (12) including an anchor portion (16) embedded in the encapsulation and a threaded portion protruding therefrom, characterised by an elastomeric gasket (24) bonded to the encapsulating material around the fastener (12) where the fastener (12) protrudes from the encapsulating material.

9. An edge encapsulated panel according to claim 8 in which the gasket (24) is substantially flush with the outermost surface of the encapsulation material.

10. An edge encapsulated panel according to claim 8 or claim 9 in which the anchor portion (16) comprises a perforated baseplate.

11. An edge encapsulated panel (2) according to any of claims 8 to 10 being a window pane for a vehicle.

## Patentansprüche

1. Verfahren zum Randverkapseln einer Scheibe (2) mit einer angegossenen Verkapselung, die wenigstens einen Schraubenbolzen (12) enthält, der aus der Verkapselung vorsteht, zum Befestigen der Scheibe (2) in ihrer Lage bei Gebrauch, bei welchem Verfahren eine Spritzform (4, 6) mit einem Hohlraum verwendet wird, der so geformt ist, daß er ein geschlossenes Volumen (10) rings um den Randbereich mindestens eines Teils einer in der Spritzform (4, 6) angeordneten Scheibe (2) bildet, eine Scheibe in der Spritzform (4, 6) angeordnet wird, wobei wenigstens ein Schraubenbolzen (12) mit einem Verankerungsteil (16) in dem geschlossenen Volumen (10) angeordnet ist und ein Gewindeabschnitt aus diesem vorsteht, eine härtbare Verkapselungsflüssigkeit in das geschlossene Volumen eingespritzt und die Flüssigkeit ausgehärtet wird, dadurch gekennzeichnet, daß eine elastomere Dichtung (24) rings um den Schraubenbolzen (12) angeordnet wird, bevor der Schraubenbolzen (12) in der Spritzform (4, 6) angeordnet wird, so daß die Dichtung (24) rings um den Schraubenbolzen (12) vorgesehen ist, wo der Schraubenbolzen (12) aus dem geschlossenen Volumen (10) vorsteht, um eine Abdichtung zwischen der Spritzform (4, 6) und dem Schraubenbolzen (12) zu schaffen.

2. Verfahren nach Anspruch 1, bei welchem die Dichtung (24) in einem Falz (29) der Spritzform (4, 6) unter Kompressionsdruck gehalten wird.

3. Verfahren nach Anspruch 1 oder 2, bei welchem beim Aushärten der Verkapselungsflüssigkeit die Dichtung (24) am Verkapselungsmaterial gebunden wird.

4. Verfahren nach Anspruch 3, bei welchem die Dichtung (24) mit der äußersten Fläche der Verkapselung im wesentlichen bündig liegt.

5. Verfahren nach einem der vorangehenden Ansprüche, bei welchem der Schraubenbolzen (12) vor dem Einspritzen der aushärtbaren Verkapselungsflüssigkeit durch einen in die Spritzform (4, 6) eingebauten Magneten (32) in seiner Lage gehalten wird.

6. Verfahren nach einem der vorangehenden Ansprüche, bei welchem der Verankerungsteil (16) des Schraubenbolzens (12) eine perforierte Grundplatte aufweist.

7. Verfahren nach einem der vorangehenden Ansprüche, bei welchem die Scheibe (2) eine Fensterscheibe für ein Fahrzeug ist.

8. Randverkapselte Scheibe (2) mit wenistens einem Schraubenbolzen (12), der einen in die Verkapselung eingebetteten Verankerungsteil (16) und einen aus dieser vorstehenden Gewindeteil aufweist, gekennzeichnet durch eine elastomere Dichtung (24), die rings um den Schraubenbolzen (12) an dem Verkapselungsmaterial gebunden ist, wo der Schraubenbolzen (12) aus dem Verkapselungsmaterial vorsteht.

9. Randverkapselte Scheibe nach Anspruch 8, bei welcher die Dichtung (24) mit der äußersten Fläche des Verkapselungsmaterials im wesentlichen bündig liegt.

10. Randverkapselte Scheibe nach Anspruch 8 oder 9, bei welcher der Verankerungsteil (16) eine perforierte Grundplatte aufweist.

11. Randverkapselte Scheibe nach einem der Ansprüche 8 bis 10, welche als Fensterscheibe für ein Fahrzeug ausgebildet ist.

## Revendications

1. Procédé pour enrober le bord d'un panneau (2) avec un enrobage surmoulé comprenant au moins un organe de fixation (12) faisant saillie de l'enrobage pour fixer le panneau (2) en position lors de l'utilisation, lequel procédé comprend l'utilisation d'un moule (4, 6) ayant une cavité configurée pour former un volume fermé (10) autour de la périphérie marginale d'au moins une partie d'un panneau (2) positionné dans le moule (4, 6), le positionnement d'un panneau dans le moule (4, 6) avec au moins un organe de fixation (12) ayant une partie d'ancrage (16) disposée dans ledit volume fermé (10) et une partie filetée qui en fait saillie, l'injection d'un liquide d'enrobage durcissable dans le volume fermé et le durcissement du liquide, caractérisé par la mise en place d'une garniture élastomérique (24) autour de l'organe de fixation (12) avant la mise en place de l'organe de fixation (12) dans le moule (4,6), afin que la garniture (24) soit placée autour de l'organe de fixation (12) à l'emplacement où l'organe de fixation (12) fait saillie du volume fermé (10) pour former un joint étanche entre le moule (4, 6) et l'organe de fixation (12).

2. Procédé selon la revendication 1, dans lequel la garniture (24) est maintenue en compression dans une rainure (29) du moule (4, 6).

3. Procédé selon la revendication 1 ou 2, dan lequel, lors du durcissement du liquide d'enrobage, la garniture (24) est liée à la matière d'enrobage.

4. Procédé selon la revendication 3, dans lequel la garniture (24) est sensiblement à fleur avec la surface située le plus à l'extérieur de l'enrobage.

5. Procédé selon l'une quelconque des revendications précédentes, dans lequel l'organe de fixation (12) est maintenu en place, avant l'injection du liquide d'enrobage durcissable, par un aimant (32) incorporé dans le moule (4, 6).

6. Procédé selon l'une quelconque des revendications précédentes, dans lequel la partie d'ancrage (16) de l'organe de fixation (12) comprend une plaque de base perforée.

7. Procédé selon l'une quelconque des revendications précédentes, dans lequel le panneau (2) est une glace de fenêtre pour un véhicule.

8. Panneau (2) à bord enrobé comprenant au moins un organe de fixation (12) comportant une partie d'ancrage (16) encastrée dans l'enrobage et une partie filetée qui en fait saillie, caractérisé par une garniture élastomérique (24) liée à la matière d'enrobage autour de l'organe de fixation (12) où l'organe de fixation (12) fait saillie de la matière d'enrobage.

9. Panneau à bord enrobé selon la revendication 8, dans lequel la garniture (24) est sensiblement à fleur avec la surface située le plus à l'extérieur de la matière d' enrobage.

10. Panneau à bord enrobé selon la revendication 8 ou la revendication 9, dans lequel la partie d'ancrage (16) comprend une plaque de base perforée.

11. Panneau (2) à bord enrobé selon l'une quelconque des revendications 8 à 10, qui est une glace de fenêtre pour un véhicule.
